(19) Europäisches Patentamt
European Patent Office
Office européen des brevets

(11) Veröffentlichungsnummer: **0 123 801**
**B1**

(12) # EUROPÄISCHE PATENTSCHRIFT

(45) Veröffentlichungstag der Patentschrift: **17.12.86**

(21) Anmeldenummer: **84101534.0**

(22) Anmeldetag: **15.02.84**

(51) Int. Cl.⁴: **C 08 F 291/02**, C 08 F 255/02, C 08 F 291/18, H 01 B 3/44, C 08 L 23/02

(54) **Verfahren zur radikalischen Vernetzung organischer Polymerer.**

(30) Priorität: **02.03.83 DE 3307408**

(43) Veröffentlichungstag der Anmeldung: **07.11.84 Patentblatt 84/45**

(45) Bekanntmachung des Hinweises auf die Patenterteilung: **17.12.86 Patentblatt 86/51**

(84) Benannte Vertragsstaaten: **CH DE FR GB IT LI NL SE**

(56) Entgegenhaltungen:
**FR-A-2 187 816**
**GB-A-844 231**
**GB-A-853 640**
**GB-A-1 069 809**
**GB-A-1 203 545**
**US-A-4 078 114**
**US-A-4 116 784**

**CHEMICAL ABSTRACTS, Band 84, 1976, Seite 38, Nr. 5893n, Columbus, Ohio, USA;**
**CHEMICAL ABSTRACTS, Band 83, Nr. 8, 25. August 1975, Seite 101, Nr. 60626g, Columbus, Ohio, USA;**

(73) Patentinhaber: **Siemens Aktiengesellschaft Berlin und München, Wittelsbacherplatz 2, D-8000 München 2 (DE)**

(72) Erfinder: **von Gentzkow, Wolfgang, Dr., Zwetschgenweg 1, D-8524 Kleinsendelbach (DE)**
Erfinder: **Markert, Helmut, Dr., Lohengrinstrasse 17, D-8500 Nürnberg (DE)**
Erfinder: **Hauschildt, Hans, Hutgraben 17, D-8520 Erlangen (DE)**
Erfinder: **Schmiedel, Manfred, Volkacher Strasse 26, D-8500 Nürnberg- Grossgründlach (DE)**

EP 0 123 801 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren zur radikalischen Vernetzung von organischen Polymeren in Gegenwart von Vernetzungsverstärkern.

Radikalisch vernetzte Polymere haben in den letzten Jahren eine zunehmende technische Bedeutung erlangt. Dafür sind folgende Gründe ausschlaggebend:

- Der vergleichsweise niedrige Preis der meist großtechnisch zugänglichen und einfach verarbeitbaren thermoplastischen und elastomeren Polymeren, insbesondere der Polyolefine;
- der insbesondere für langgestreckte Güter, wie Kabel- und Leitungsisolierungen, Rohre und Schläuche, technisch relativ einfach und kostengünstig durchführbare Prozeß der Vernetzung;
- das wesentlich verbesserte thermisch-mechanische Eigenschaftsspektrum vernetzter Polymerer, das eine Erweiterung des Einsatzbereiches auf Temperaturen oberhalb des Erweichungsbereiches der thermoplastischen Polymeren ermöglicht.

Bei der in der Technik bevorzugt durchgeführten radikalischen Vernetzung werden in den Polymeren Radikale erzeugt, die miteinander unter Ausbildung von Vernetzungsbrücken reagieren. Die Erzeugung der Radikale kann dabei entweder durch thermischen Zerfall labiler chemischer Verbindungen, wie organische Peroxide, die vor dem Vernetzungsvorgang in die Polymeren eingemischt.werden, oder durch Bestrahlung der Polymeren mit energiereichen Strahlen, insbesondere mit beschleunigten Elektronen, erfolgen. Während die peroxidische Vernetzung, in Form verschiedener Verfahren, technisch seit langem praktiziert wird, ist die technische Durchführung der Strahlenvernetzung noch relativ jung und befindet sich insbesondere bei der Vernetzung dickwandiger Güter, wie Mittelspannungsaderisolierungen aus Polyethylen, noch in der Entwicklung.

Das Ziel eines jeden technischen Vernetzungsverfahrens ist eine möglichst schnelle, kostengünstige, homogene und materialschonende Vernetzung. Es ist auch bekannt, den zu vernetzenden Polymeren zu diesem Zweck sogenannte Vernetzungsverstärker zuzusetzen. Alle bekannten Vernetzungsverstärker sind Verbindungen mit C-C-Doppelbzw. -Dreifachbindungen. Die Vernetzungsverstärker steigern die Ausbeute an Vernetzungsstellen bzw. senken die zum Erreichen des technisch erforderlichen Vernetzungsgrades benötigte Strahlendosis bzw. Peroxidkonzentration; die genaue Wirkungsweise der Vernetzungsverstärker ist bisher allerdings noch nicht geklärt.

Unerläßlich ist der Einsatz von Vernetzungsverstärkern beispielsweise bei der Strahlenvernetzung von Polyvinylchlorid (PVC) und bei der drucklosen peroxidischen Vernetzung von Polyethylen im Salzbad (siehe dazu DE-OS 28 74 503). PVC, das aufgrund seiner Strahlenempfindlichkeit stärker zum Polymerabbau neigt als zur Vernetzung, ist ohne Vernetzungsverstärker nicht vernetzbar. Bei der drucklosen Vernetzung im Salzbad werden Vernetzungsverstärker benötigt, um den Vernetzungsprozen zu beschleunigen und Porenbildung durch gasförmige Zersetzungsprodukte des Peroxids zu vermeiden.

Auch bei der Strahlenvernetzung von Mittelspannungsisolierungen oder dickwandigen Rohren aus Polyethylen ist der Einsatz von Vernetzungsverstärkern erforderlich. Bei der Bestrahlung werden nämlich - proportional zur Strahlendosis - Wasserstoff und Wärme erzeugt, und zwar in einem Ausmaß, daß dies - bei der zur technisch ausreichenden Vernetzung von stabilisiertem Polyethylen niederer Dichte (LDPE) erforderlichen Dosis von ca. 250 kGy - einer erheblichen Gasmenge und - im adiabatischen Fall - einer Temperaturerhöhung im Polymeren um ca. l00°C entspricht. Da bei den technisch angestrebten hohen Pertigungsgeschwindigkeiten - bei der üblichen Technik - die Wärme nicht ausreichend schnell abgeführt werden kann, ist somit eine Schädigung des Polymermaterials durch Porenbildung die unvermeidbare Folge. Durch den Einsatz von Vernetzungsverstärkern kann nun aber die zur Vernetzung von Hochdruckpolyethylen benötigte Dosis auf ca. 750 kGy oder noch geringere Dosen gesenkt werden, wodurch sowohl die Wärme- als auch die Gasentwicklung auf unkritische Werte reduziert werden kann.

Technisch einsetzbare Vernetzungsverstärker müssen neben der Forderung nach sehr guter Wirksamkeit einer Vielzahl weiterer, fertigungstechnisch bedingter Anforderungen gerecht werden. Da sie vor der Formgebung, beispielsweise durch Extrusion, in das Polymere einzumischen und darin homogen zu verteilen sind, müssen sie gut polymerverträglich bzw. polymerlöslich und insbesondere für den Vorgang der Formgebung, der bei Temperaturen bis zu 200°C erfolgt, thermisch stabil sein. Aunerdem dürfen sich die Vernetzungsverstärker weder bei der Formgebung noch bei der Zwischenlagerung des geformten Gutes bis zur Vernetzung (off-line-Fertigung) verflüchtigen, d.h. sie müssen möglichst wenig flüchtig sein. Darüber hinaus dürfen die Vernetzungsverstärker die für den technischen Einsatz des Polymerproduktes geforderten Eigenschaften nicht negativ beeinflussen.

Ein technisch häufig eingesetzter Vernetzungsverstärker ist Triallylcyanurat (TAC). Aber auch andere Produkte, wie Dipropargylmaleat (DPM), Dipropargylsuccinat (DPS) oder Triallylmellitat (TATM) werden für den technischen Einsatz empfohlen (siehe beispielsweise DE-AS 27 57 B2D und US-PS 4 713 595).

Trotz der Vielzahl bekannter Vernetzungsverstärker sind bislang keine Verbindungen bekannt, die hoch wirksam sind und gleichzeitig den genannten fertigungstechnisch bedingten Anforderungen in ausreichendem Mane gerecht werden. Von den bisher am besten untersuchten Verbindungen sind die Acrylate bzw. Methacrylate, Allylverbindungen, Propinylverbindungen und Maleinimide zwar ausreichend vernetzungsverstärkend wirksam, jedoch relativ polymerunverträglich und stark flüchtig. Die Maleinimide sind zudem thermisch instabil und verursachen beispielsweise bereits bei Temperaturen zwischen 750 und 200°C eine Anvernetzung von Polyolefinen. Bei der peroxidischen Vernetzung von Polyolefinen können durch

unzureichende Polymerverträglichkeit und zu hohe Flüchtigkeit - ferner Verluste an Vernetzungsverstärkern auftreten. Diese Verluste können zwar durch eine Überdosierung ausgeglichen werden, dadurch wird allerdings das hergestellte Produkt verteuert.

Aufgabe der Erfindung ist es, für ein Verfahren der eingangs genannten Art Vernetzungsverstärker anzugeben, welche die an diese Substanzen gestellten Anforderungen in hohem Maße erfüllen.

Dies wird erfindungsgemän dadurch erreicht, daß als Vernetzungsverstärker oligomere Ester folgender Struktur

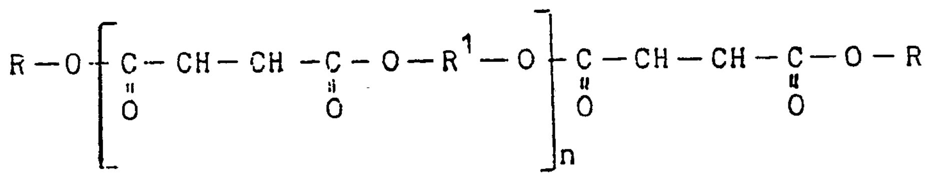

verwendet werden, wobei folgendes gilt:

R = Alkenyl oder Alkinyl;
$R^1$ = Alkylen, Alkenylen, Alkinylen oder $-(R^2-O)_m-R^2-$,
mit $R^2 = CH_2$, $(CH_2)_2$, $(CH_2)_3$ oder $CH_2-CH(CH_3)$, und
m = 1 bis 50; und
n = 1 bis 10.

Die beim erfindungsgemäßen Verfahren verwendeten Vernetzungsverstärker, die einzeln oder in Form von Gemischen eingesetzt werden können, sind - in chemischer Hinsicht - oligomere Ester der Maleinsäure oder Fumarsäure mit ungesättigten aliphatischen Alkoholen und mit gesättigten oder ungesättigten Diolen. Derartige Vernetzungsverstärker haben den Vorteil, daß sie - bei einer gegenüber bisher verwendeten Produkten verbesserten Polymerverträglichkeit und einer stark verringerten Flüchtigkeit - eine hervorragende vernetzungsverstärkende Wirksamkeit bei gleichzeitig ausreichender thermischer Beständigkeit, selbst bei hohen Misch- und Extrusionstemperaturen, besitzen und daß sie die für den technischen Einsatz der Polymeren, beispielsweise von Polyolefinen, bei Kabel- und Leitungsisalierungen, Rohren und Schläuchen erforderlichen Eigenschaften nicht nachteilig beeinflussen. Die genannten Verbindungen sind überwiegend flüssig und lassen sich nach den in der Technik üblichen Verfahren in die Polymeren einarbeiten.

Das erfindungsgemäße Verfahren eignet sich sowohl zur peroxidischen Vernetzung als auch zur Strahlenvernetzung von Polymeren. Vorteilhaft werden dabei 0,1 bis 10 Masse-%, bezogen auf das Polymere, an Vernetzungsverstärker verwendet, und vorzugsweise 0,5 bis 5 Masse-%. Von den Vernetzungsverstärkern werden bevorzugt solche eingesetzt, bei denen in der vorstehenden Formel R ein Alkinyl- und $R^7$ ein Alkylenrest ist.

Beim erfindungsgemänen Verfahren werden bevorzugt folgende organische Polymere eingesetzt:

- Polyolefine, wie Homo- oder Copolymerisate von Ethylen, Propen, Buten-7 und Isobuten;
- Copolymerisate von Ethylen mit Vinylacetat, Ethylacrylat oder Butylacrylat,;
- Terpolymerisate, die durch Polymerisation von Ethylen mit Propen in Gegenwart nicht-konjugierter Diene, insbesondere Dicyclopentadien, Hexadien und Ethylidennorbornen, erhalten werden,;
- Gemische auf der Basis von Polyolefinen oder mit Polyolefinen als wesentlichem Bestandteil, insbesondere Mischungen der vorstehend genannten Homo-, Co- und Terpolymerisate untereinander oder mit Polyvinylchlorid, Siliconkautschuk, Polyurethanen, Polyphenylenoxid, chlorierten Polyolefinen oder fluorhaltigen Polymeren;
- Blockcopolymere, insbesondere aus Styrol, Ethylen, Propen und Buten; und
- Natur- und Synthesekautschuke.

Vorteilhaft können bei diesem Verfahren aber auch weitere Polymere, wie Polyphenylenoxide, Polyvinylchlorid, Polyvinylidenfluorid, Copolymere aus Ethylen und halogenhaltigen Olefinen sowie ungesättigte Polyester und Polyurethane, verwendet werden. Die Vernetzungsverstärker werden dabei jeweils vor dem Vernetzungsvorgang in die organischen Polymeren eingebracht.

Die nach dem erfindungsgemäßen Verfahren hergestellten vernetzten organischen Polymeren eignen sich vorteilhaft für Kabel- und Leitungsisolierungen sowie für Rohre und Schläuche, ferner als Mantelmaterialien und als schrumpffähige Materialien, beispielsweise für die Muffen- und Verbindungstechnik. Bei der Verwendung als Kabel- und Leitungsisolierung kommt insbesondere der Mittelspannungsbereich in Betracht. Hierbei steht die Strahlenvernetzung von Polyolefinen, wie Polyethylen und Ethylen-Propen-Dien-Terpolymerisaten, im Vordergrund.

Anhand von Ausführungsbeispielen und Figuren soll die Erfindung noch näher erläutert werden.

Die beim erfindungsgemäßen Verfahren eingesetzten oligomeren Ester können auf zwei verschiedenen

Wegen erhalten werden, und zwar entweder durch Addition eines monofunktionellen aliphatischen Alkohols (R-DH) an Maleinsäureanhydrid und nachfolgende Veresterung der freien Carboxylgruppe mit einem aliphatischen Diol ($HO\text{-}R^1\text{-}OH$) oder durch Addition eines Diols an zwei Moleküle Maleinsäureanhydrid und nachfolgende Veresterung der freien Carboxylgruppen mit einem monofunktionellen Alkohol; in beiden Fällen werden bei der Veresterungsreaktion durch partielle Umesterung oligomere Produkte erhalten. Sowohl die Additions- als auch die Veresterungsreaktion wird dabei jeweils in Anwesenheit von Katalysatoren durchgeführt. Bei der Veresterung kann, insbesondere unter der Einwirkung von Säuren, cis/trans-Isomerisierung der Produkte der Maleinsäure zu Produkten der Fumarsäure auftreten.

In Tabelle 1 sind eine Reihe von in der beschriebenen Weise hergestellten Verbindungen zusammengestellt, die beim erfindungsgemäßen Verfahren als Vernetzungsverstärker eingesetzt werden können. Dabei ist neben der Bedeutung von R und $R^1$ (siehe die vorstehende Formel) auch der mittlere Oligomerisierungsgrad der einzelnen Verbindungen angegeben. Sämtliche der in Tabelle 1 enthaltenen Verbindungen sind bei Raumtemperatur viskos.

**Tabelle 1**

| Nr. | R | $R^1$ | $\bar{n}$ |
|---|---|---|---|
| 1a | $HC{\equiv}C\text{-}CH_2\text{-}$ | $\text{-}CH_2\text{-}C(CH_3)_2\text{-}CH_2\text{-}$ | 1 |
| 1b | $HC{\equiv}C\text{-}CH_2\text{-}$ | $\text{-}CH_2\text{-}C(CH_3)_2\text{-}CH_2\text{-}$ | 2,8 |
| 2a | $HC{\equiv}C\text{-}CH_2\text{-}$ | $\text{-}CH_2\text{-}CH_2\text{-}$ | 1,8 |
| 2b | $HC{\equiv}C\text{-}CH_2\text{-}$ | $\text{-}CH_2\text{-}CH_2\text{-}$ | 3,8 |
| 3 | $HC{\equiv}C\text{-}CH_2\text{-}$ | $\text{-}[CH_2\text{-}CH_2\text{-}O]_m\text{-}CH_2\text{-}CH_2\text{-}$; m=4 | 1,6 |
| 4 | $HC{\equiv}C\text{-}CH_2\text{-}$ | $\text{-}[CH_2\text{-}CH_2\text{-}O]_m\text{-}CH_2\text{-}CH_2\text{-}$; m=6 | 1,5 |
| 5 | $HC{\equiv}C\text{-}CH_2\text{-}$ | $\text{-}[CH_2\text{-}CH_2\text{-}O]_m\text{-}CH_2\text{-}CH_2\text{-}$; m=9 | 1,3 |
| 6 | $HC{\equiv}C\text{-}CH_2\text{-}$ | $\text{-}(CH_2)_{12}\text{-}$ | 1,7 |
| 7 | $HC{\equiv}C\text{-}CH_2\text{-}$ | $\text{-}CH_2\text{-}C{\equiv}C\text{-}CH_2\text{-}$ | 3,1 |
| 8 | $H_2C{=}CH\text{-}CH_2\text{-}$ | $\text{-}CH_2\text{-}C{\equiv}C\text{-}CH_2\text{-}$ | 2,8 |
| 9 | $H_3C\text{-}C{\equiv}C\text{-}CH_2\text{-}CH_2\text{-}$ | $\text{-}CH_2\text{-}C(CH_3)_2\text{-}CH_2\text{-}$ | 3,2 |
| 10 | $HC{\equiv}C\text{-}CH\text{-}CH_3$ | $\text{-}CH_2\text{-}C(CH_3)_2\text{-}CH_2\text{-}$ | 3,2 |
| 11 | $H_2C{=}C(CH_3)\text{-}CH_2\text{-}$ | $\text{-}CH_2\text{-}C(CH_3)_2\text{-}CH_2\text{-}$ | 3,1 |
| 12 | $H_2C{=}CH\text{-}CH_2\text{-}$ | $\text{-}CH_2\text{-}CH{=}CH\text{-}CH_2\text{-}$ | 1,4 |
| 13 | $H_2C{=}CH\text{-}CH_2\text{-}$ | $\text{-}CH_2\text{-}C(CH_3)_2\text{-}CH_2\text{-}$ | 1,6 |
| 14 | $H_2C{=}CH\text{-}CH_2\text{-}$ | $\text{-}CH_2\text{-}CH_2\text{-}$ | 3,1 |
| 15 | $HC{\equiv}C\text{-}CH_2\text{-}$ | $\text{-}CH_2\text{-}CH{=}CH\text{-}CH_2\text{-}$ | 2,8 |
| 16 | $HC{\equiv}C\text{-}CH_2\text{-}CH_2\text{-}$ | $\text{-}CH_2\text{-}C(CH_3)_2\text{-}CH_2\text{-}$ | 2,9 |

die meisten dieser Verbindungen sind etwas gefärbt (gelblich bzw. bräunlich). Bei den beim erfindungsgemänen Verfahren eingesetzten Verbindungen beträgt der Zahlenwert für m im übrigen vorzugsweise 1 bis 20.

**Beispiel 1**

100 - X Masseteile Hochdruckpolyethylen LDPE (d = 0,918 g/cm³; $MFI_{190/2}$ = 0,2) werden zusammen mit X Masseteilen eines Vernetzungsverstärkers (in einer geschlossenen Polyethylenkapsel) in einen auf 150°C geheizten Laborkneter eingefüllt und im geschlossenen Kneter plastifiziert und homogenisiert; die Mischung wird dann durch Abkühlen des Kneters bei laufenden Knetwellen zerrieben. Durch diese Arbeitsweise werden Additivverluste vermieden. Aus der krümelig anfallenden Mischung werden bei 180°C 1 mm-Platten geprent und mit Hilfe eines 2 MV-Van de Graaff-Elektronenbeschleunigers mit Elektronenstrahlen verschiedener Dosis (Dosisrate:. 1 kGy/s) vernetzt. Zur Charakterisierung der jeweiligen Vernetzungsausbeute wird die prozentuale Vernetzung durch Ermittlung des unlöslichen Gelanteils bestimmt. Dazu werden aus der Prenplatte Würfel der Kantenlänge 1 mm hergestellt, gewogen mit siedendem Xylol 12 Stunden extrahiert und nach Trocknung im Vakuum nochmals gewogen.

Tabelle 2 enthält die für unterschiedliche Konzentrationen verschiedener Vernetzungsverstärker VV - nach Bestrahlung mit verschiedenen Strahlendosen - gefundenen Gelwerte. Ein Vergleich mit gleichbehandeltem zusatzfreien Polyethylen und einer Polyethylenprobe mit dem bekannten Vernetzungsverstärker Triallylcyanurat (TAC) zeigt die hohe Wirksamkeit der erfindungsgemän eingesetzten Verbindungen. Die in Tabelle 2 ferner angegebene Dosis D kennzeichnet die zur technisch ausreichenden Vernetzung erforderliche Strahlendosis.

**Tabelle 2**

| VV | Masseteile X | Gelwert [%] nach Bestrahlung mit 40 kGy | 80 kGy | 120 kGy | 160 kGy | 200 kGy | Dosis D kGy |
|---|---|---|---|---|---|---|---|
| —0 | 0 | 46 | 56 | 64 | 70 | 74 | 200 |
| TAC | 0,75 | 57 | 65 | 72 | 76 | 80 | 150 |
| | 1,25 | 59 | 72 | 75 | 79 | 82 | 120 |
| | 1,75 | 60 | 72 | 78 | 82 | 84 | 100 |
| 1 a | 1,0 | 66 | 74 | 79 | 83 | 85 | 80 |
| | 1,9 | 70 | 79 | 83 | 84 | 86 | 60 |
| 1 b | 0,4 | 60 | 70 | 74 | 78 | 81 | 120 |
| | 0,8 | 64 | 72 | 78 | 81 | 83 | 90 |
| | 1,2 | 67 | 76 | 80 | 83 | 85 | 80 |
| | 2,0 | 69 | 80 | 83 | 84 | 86 | 60 |
| 2 a | 1,7 | 72 | 80 | 84 | 86 | 86 | 50 |
| 2 b | 1,0 | 63 | 74 | 79 | 81 | 84 | 80 |
| | 1,7 | 66 | 76 | 80 | 82 | 84 | 70 |
| 3 | 2,4 | 64 | 74 | 76 | 82 | 84 | 80 |
| 4 | 2,9 | 63 | 73 | 76 | 80 | 82 | 90 |
| 5 | 2,9 | 63 | 71 | 74 | 79 | 81 | 120 |
| 6 | 2,0 | 66 | 74 | 80 | 82 | 83 | 80 |
| | 2,4 | 67 | 75 | 81 | 83 | 84 | 70 |
| 7 | 1,0 | 60 | 67 | 73 | 77 | 79 | 120 |
| | 2,0 | 66 | 74 | 80 | 82 | 83 | 80 |

In Fig. 1 ist die Beziehung zwischen Strahlendosis und Massegehalt (d.h. Gehalt in Masse-%) des Vernetzungsverstärkers - bei technisch ausreichender Vernetzung (100 % Dehnung nach 30 min bei 200°C mit 20 $N/cm^2$) - am Beispiel der Verbindung 1b und von TAC dargestellt. Es zeigt sich, dan der erfindungsgemäne Vernetzungsverstärker (Kurve 10) - im Vergleich zum bekannten Vernetzungsverstärker (Kurve 11) - eine stark verbesserte Wirksamkeit besitzt.

**Beispiel 2**

100 - X - r Masseteile Hochdruckpolyethylen LDPE (d = 0,918 $g/cm^3$; $MFI_{190/2}$ = 0,2) werden zusammen mit X Masseteilen eines Vernetzungsverstärkers und Y Masseteilen des Peroxids 1.3-Bis(tert.butyl-peroxi-isopropyl)-benzol, beides jeweils in einer geschlossenen LDPE-Kapsel, in einen auf 135°C geheizten Laborkneter eingefüllt und im geschlossenen Kneter plastifiziert und homogenisiert; die Mischung wird dann durch Abkühlen des Kneters bei laufenden Knetwellen zerkleinert. Aus der krümelig anfallenden Mischung werden dann bei 180°C 1 mm-Platten gepreßt (Prenzeit: 15 min); dabei findet auch die Vernetzung statt. Zur Charakterisierung der Vernetzungsausbeute wird die prozentuale Vernetzung, wie in Beispiel 1 beschrieben, bestimmt.

Tabelle 3 enthält die für unterschiedliche Konzentrationen an Vernetzungsverstärker und Peroxid ermittelten Gelwerte. Der Vergleich mit gleichbehandeltem Polyethylen, das keinen Vernetzungsverstärker bzw. den bekannten Vernetzungsverstärker Triallylcyanurat (TAC) enthält, zeigt die hohe vernetzungsverstärkende Wirksamkeit der erfindungsgemän eingesetzten Verbindungen.

**Tabelle 3**

| Vernetzungs-verstärker | Masseteile X | Peroxid-Masseteile Y | Gelwert nach 15 min/180°C [%] |
|---|---|---|---|
| ohne | – | 0,3 | 65 |
| | – | 0,5 | 77 |
| | – | 0,7 | 81 |
| | – | 1,2 | 89 |
| TAC | 0,7 | 0,3 | 84 |
| | 0,7 | 0,5 | 86 |
| | 0,7 | 0,7 | 89 |
| | 0,7 | 1,2 | 93 |
| 1 b | 0,4 | 0,5 | 84 |
| | 0,6 | 0,5 | 86 |
| | 0,8 | 0,5 | 88 |
| | 1,0 | 0,5 | 90 |
| 2 b | 0,7 | 0,5 | 87 |
| 3 | 0,7 | 0,5 | 86 |
| 12 | 0,7 | 0,5 | 88 |
| 14 | 0,7 | 0,5 | 86 |

**Beispiel 3**

99,7 - X Masseteile eines Ethylen-Propylen-Copolymeren (Ethylengehalt: 40 bis 45 Masse-%; Mooney-Viskosität ML (1+B min) bei 100°C: 35 bis 45) werden zusammen mit X Masseteilen eines Vernetzungsverstärkers und 0,3 Masseteilen oligomerisiertem 2.2.4-Trimethyl-1.2-dihydrochinolin als Oxidationsinhibitor, beides jeweils in einer geschlossenen LDPE-Kapsel, in einen auf 150°C aufgeheizten Laborkneter eingefüllt, im geschlossenen Kneter plastifiziert und 10 min homogenisiert. Danach wird die Mischung durch Abkühlen auf 80°C im Kneter zerkrümelt. Aus dem krümeligen Produkt werden bei 150°C 1 mm-Platten gepreßt und mit Elektronenstrahlen unterschiedlicher Dosis vernetzt.

Tabelle 4 enthält die durch Extraktion ermittelten Gelwerte. Die Werte zeigen, dan ein sonst nicht oder nur schwer vernetzbares niedermolekulares Ethylen-Propylen-Copolymerisat in Gegenwart der erfindungsgemän eingesetzten Verbindungen ausreichend vernetzt werden kann.

**Tabelle 4**

| Vernetzungsverstärker | Masseteile X | Gelwert [%] nach Bestrahlung mit 40 kGy | 80 kGy | 120 kGy | 160 kGy | 200 kGy |
|---|---|---|---|---|---|---|
| ohne | – | 27 | 35 | 41 | 46 | 52 |
| 1 b | 1 | 38 | 49 | 56 | 62 | 68 |
| | 2 | 51 | 58 | 66 | 71 | 75 |
| 2 b | 2 | 53 | 59 | 68 | 73 | 78 |
| 12 | 2 | 52 | 57 | 67 | 72 | 76 |

**Beispiel 4**

99,7 : X Masseteile eines Ethylen-Propylen-Blockcopolymeren (d = 0,90 g/cm$^3$; MFI230/5 = 1,3; Kugeldruckhärte = 49 N/mm) werden mit X Masseteilen eines Vernetzungsverstärkers und 0,3 Masseteilen oligomerisiertem 2.2.4-Trimethyl-1.2-dihydrochinolin als Oxidationsinhibitor, beides jeweils in einer geschlossenen LDPE-Kapsel, in einen auf 180°C aufgeheizten Laborkneter eingefüllt, im geschlossenen Kneter plastifiziert und 10 min homogenisiert; dabei steigt die Temperatur auf 190°C. Die Mischung wird dann durch Abkühlen auf ca. 120°C im Kneter zerkleinert. Aus dem dabei anfallenden krümeligen Produkt werden bei 200°C durch 2-minüti-ges Pressen 1 mm-Platten hergestellt und mit Elektronenstrahlen unterschiedlicher Dosis vernetzt.

Tabelle 5 enthält die durch Extraktion ermittelten Gelwerte. Die Werte zeigen, dan das sonst nicht vernetzbare Ethylen-Propylen-Blockcopolymere in Gegenwart der erfindungsgemän eingesetzten Vernetzungsverstärker mit 160 kGy ausreichend vernetzbar ist.

**Tabelle 5**

| Vernetzungsverstärker | Masseteile X | Gelwert [%] nach Bestrahlung mit 40 kGy | 80 kGy | 120 kGy | 160 kGy |
|---|---|---|---|---|---|
| ohne | – | 0 | 0 | 0 | 0 |
| 1 a | 2,0 | 61 | 67 | 71 | 75 |
| 1 b | 2,0 | 60 | 66 | 70 | 74 |
| 2 a | 2,0 | 62 | 68 | 72 | 76 |

**Beispiel 5**

Auf einer Walze bei 160°C hergestellte 1 mm-Platten einer Mischung aus
47 Masseteilen PVC
32,5 Masseteilen eines Weichmachergemisches
10 Masseteilen Kaolin
4 Masseteilen Bleiphthalat
0,6 Masseteilen Bleistearat
0,9 Masseteilen eines Gemisches aus drei Oxidationsinhibitoren
5 Masseteilen Vernetzungsverstärker

werden mit Elektronenstrahlen unterschiedlicher Dosis vernetzt. Neben den durch Extraktion ermittelten Gelwerten wird die Wärmedehnung bei 200°C durch Belastung mit 20 $N/mm^2$ bestimmt.

Tabelle 6 enthält die Gelwerte und die Dehnungswerte. Bei den in Klammern gesetzten Dehnungswerten ist die vorübergehende Dehnung nach 75 min bei 20C°C und nach dem Schrägstrich die bleibende Dehnung bei 200°C nach Entfernung des Gewichtes angegeben.

**Tabelle 6**

| Vernetzungsverstärker | Gelwert [%] (Wärmedehnung [%]) nach Bestrahlung mit 40 kGy | 80 kGy | 120 kGy |
|---|---|---|---|
| ohne | 66 (gerissen) | 69 (gerissen) | 72 (gerissen) |
| TATM | 69 (172/60) | 75 (108/36) | 81 (61/20) |
| TAC | 73 (166/48) | 77 (98/32) | 82 (56/20) |
| 1 b | 81 (144/52) | 83 (60/24) | 86 (48/12) |

**Beispiel 6**

Um die Flüchtigkeit der erfindungsgemäß eingesetzten Verbindungen beurteilen und damit die Verluste während der Verarbeitung abschätzen zu können, wurden sie mit Hilfe der thermogravimetrischen Analyse (Heizrate: 10 K/min; Stickstoffströmungsgeschwindigkeit: 100 ml/min) untersucht.

Tabelle 7 enthält die bei Erreichen von 200°C ermittelte Masse verschiedener Verbindungen in %, bezogen auf die Ausgangsmasse jeder Messung.

In Fig. 2 ist der Masseverlust einer Reihe von Verbindungen in Abhängigkeit von der Temperatur graphisch dargestellt. Die einzelnen Kurven gelten dabei für folgende Verbindungen (vgl. Tabelle 7):.

Kurve 20: DPS; Kurve 21: DPM; Kurve 22: TAC;

Kurve 23: 1b; Kurve 24: 4; Kurve 25: 5.

Sowohl Tabelle 7 als auch Fig. 2 belegen die stark verringerte Flüchtigkeit der erfindungsgemäß eingesetzten Vernetzungsverstärker im Vergleich zu bekannten Vernetzungsverstärkern.

**Beispiel 7**

Um die Polymerverträglichkeit der erfindungsgemäß eingesetzten Verbindungen und damit die Migrationsverluste aus den Polymeren beurteilen zu können, wurden Polymermischungen aus 99 Masseteilen Hochdruckpolyethylen (d = 0,918 $g/cm^3$; $MFI_{190/2}$ = 0,2) und 1 Masseteil Vernetzungsverstärker hergestellt (siehe Beispiel 1) und daraus 0,7 mm-Platten gepreßt und unvernetzt bei 30°C in einem Trockenofen gelagert. In bestimmten Zeitintervallen wurden die Platten IR-spektroskopisch auf den verbliebenen Gehalt an Vernetzungsverstärker überprüft.

In Figur 3 ist für verschiedene Vernetzungsverstärker die Abhängigkeit der Migration von der Zeit graphisch dargestellt. Dabei gilt folgende Zuordnung: Kurve 30: Dipropargylmaleat (DPM); Kurve 37: Triallylcyanurat (TAC); Kurve 32: 7b; Kurve 33: 2b; Kurve 34: 5.

Fig. 3 zeigt, daß die beim erfindungsgemänen Verfahren eingesetzten Vernetzungsverstärker sehr viel weniger migrieren als die bekannten Vernetzungsverstärker, d.h. die Migrationsverluste sind geringer.

**Tabelle 7**

| Vernetzungsverstärker | Masserückstand bei 200°C in % |
|---|---|
| 1 b | 92,5 |
| 2 a | 65,0 |
| 2 b | 91,6 |
| 3 | 89,1 |
| 4 | 93,6 |
| 5 | 94,0 |
| 6 | 89,4 |
| 7 | 90,8 |
| 8 | 88,9 |
| 9 | 91,4 |
| 10 | 92,1 |
| 11 | 91,8 |
| 12 | 82,6 |
| Dipropargylmaleat (DPM) | 6,5 |
| Dipropargylsuccinat (DPS) | 0,0 |
| Triallylcyanurat (TAC) | 44,0 |
| Diallylidenpentaerythrit | 5,1 |

5 Patentansprüche
3 Figuren

## Patentansprüche

1. Verfahren zur radikalischen Vernetzung von organischen Polymeren in Gegenwart von Vernetzungsverstärkern, dadurch gekennzeichnet, daß als Vernetzungsverstärker oligomere Ester folgender Struktur

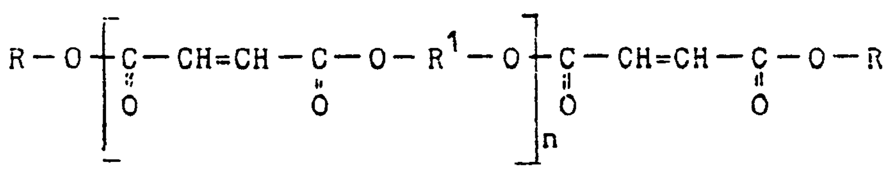

verwendet werden, wobei folgendes gilt:
R = Alkenyl oder Alkinyl;
$R^7$ – Alkylen, Alkenylen, Alkinylen oder $-(R^2-O)_m-R^2-$, mit $R^2 = CH_2, (CH_2)_2, (CH_2)_3$ oder $CH_2-CH(CH_3)$, und
m = 1 bis 50; und
n = 1 bis 10.

2. Verfahren nach Anspruch 1, dadurch gekennzeichnet, daß Vernetzungsverstärker verwendet werden, bei denen R Alkinyl und $R^7$ Alkylen ist.

3. Verfahren nach Anspruch 1 oder 2, dadurch gekennzeichnet, daß 0,7 bis 70 Masse-%, vorzugsweise 0,5 bis 5 Masse-%, bezogen auf das Polymere, an Vernetzungsverstärker verwendet werden.

4. Verfahren nach einem der Ansprüche 7 bis 3, dadurch gekennzeichnet, daß als organische Polymere Polyolefine, insbesondere Homo- oder Copolymerisate von Ethylen, Propen, Buten-7 und Isobuten, Copolymerisate von Ethylen mit Vinylacetat, Ethylacrylat oder Butylacrylat, Terpolymerisate, die durch Polymerisation von Ethylen mit Propen in Gegenwart nicht-konjugierter Diene, insbesondere Dicyclopentadien, Hexadien und Ethylidennorbornen, erhalten werden, Gemische auf der Basis von Polyolefinen oder mit Polyolefinen als wesentlichem Bestandteil, insbesondere Mischungen der Homo-, Cound Terpolymerisate untereinander oder mit Polyvinylchlorid, Siliconkautschuk, Polyurethanen, Polyphenylenoxid, chlorierten Polyolefinen oder fluorhaltigen Polymeren, Blockcopolymere, insbesondere aus Styrol, Ethylen, Propen und Buten, oder Natur- und Synthesekautschuke verwendet werden.

5. Verfahren nach einem der Ansprüche 7 bis 3, dadurch gekennzeichnet, daß als organische Polymere Polyphenylenoxide, Polyvinylchlorid, Polyvinylidenfluorid, Copolymere aus Ethylen und halogenhaltigen Olefinen, oder ungesättigte Polyester und Polyurethane verwendet werden.

**Claims**

1. A process for the free radical cross-linking of organic polymers in the presence of cross-linking activators, <u>characterised in</u> that oligomeric esters of the following structure

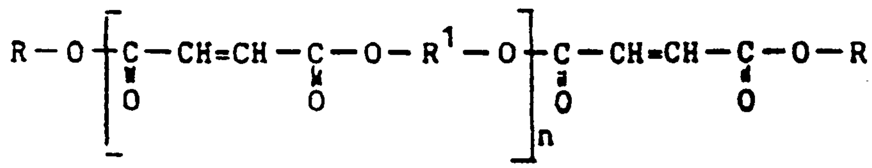

are used as cross-linking activator, where:
R = alkenyl or alkinyl;
$R^1$ = alkylene, alkenylene, alkinylene or $-(R^2-O)m-R^2-$, where-$R^2$ = $CH_2$,$(CH_2)_2$, $(CH_2)_3$ or $CH_2-CH(CH_3)$ and m = 1 to 50; and
n = 1 to 10.

2. A process as claimed in Claim 1, <u>characterised in</u> that cross-linking activators are used, in which R is alkinyl and $R^1$ is alkylene.

3. A process as claimed in Claim 1 or Claim 2, <u>characterised in</u> that 0.1 to 10 mass-%, preferably 0.5 to 5 mass-% of cross-linking activator relative to the polymer is used.

4. A process as claimed in one of Claims 1 to 3, <u>characterised in</u> that, as organic polymers, polyolefines, in particular homo- or copolymers of ethylene, propene, butene-1 and isobutene, copolymers of ethylene with vinyl acetate, ethyl acrylate or butyl acrylate, terpolymers obtained by the polymerisation of ethylene with propene in the presence of non-conjugated dienes, in particular dicyclopentadiene, hexadiene and ethylidene norborne, mixtures having a basis of polyolefines or having polyolefines as a substantial constituent, in particular mixtures of the homo-, co- and terpolymers with one another, or with poly inyl chloride, silicone rubber, polyurethanes, polyphenylene oxide, chlorinated polyolefines or fluorine-containing polymers, block copolymers, in particular consisting of styrene, ethylene, propene and butene, or natural and synthetic rubber are used.

5. A process as claimed in one of Claims 1 to 3, <u>characterised in</u> that, as organic polymers, polyphenylene oxides, poly inyl chloride, polyvinyliden fluoride, copolymers of ethylene with halogen-containing olefines, or unsatured polyesters and polyurethanes are used.

**Revendications**

1. Procédé de réticulation radicalaire de polymères organiques en présence de renforçateurs de réticulation, caractérisé en ce qu'il consiste à utiliser, comme renforçateurs de réticulation, des esters oligomères de formule suivante

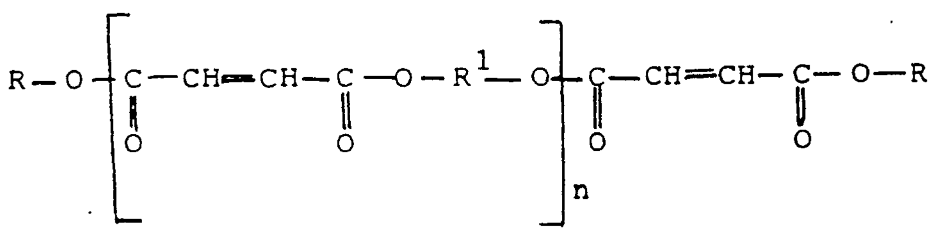

dans laquelle:
R = alcényle ou alcinyle;
$R^1$ = alcoylène, alcénylène, alcinyléne ou
$-(R^2-O)_m-R^2-$, avec $R^2$ = $CH_2$, $(CH_2)_2$, $(CH_2)_3$ ou $CH_2-CH(CH_3)$, et
m = 1 à 50; et
n = 1 à 10.

2. Procédé suivant la revendication 1, caractérisé en ce qu'il consiste à utiliser, comme renforçateur de réticulation, ceux dans lesquels R est alcinyle et $R^1$ est alcoylène.

3. Procédé suivant la revendication 1 ou 2, caractérisé en ce qu'il consiste à utiliser de 0,1 à 10 % en poids et, de préférence, de 0,5 à 5 % en poids de renforçateur de réticulation par rapport au polymère.

4. Procédé suivant l'une des revendications 1 à 3, caractérisé en ce qu'il consiste à utiliser, comme polymères organiques, des polyoléfines, notamment des homopolymères ou des copolymères d'éthylène, de propène, de butène-1 et d'isobutène, des copolymères d'éthylène et d'acétate de vinyle, d'éthylène et d'acrylate d'éthyle ou d'éthylène et d'acrylate de butyle, des terpolymères, qui sont obtenus par polymérisation d'éthylène et de propène, en présence de diènes non conjugués, notamment de dicyclopentadiène, d'hexadiène et d'éthylidènnorbornène, des mélanges à base de polyoléfines ou ayant des polyoléfines comme constituant essentiel, notamment des mélanges des homopolymères, copolymères et terpolymères, entre eux, ou avec du poly(chlorure de vinyle), du caoutchouc de silicone, des polyuréthannes, du poly(oxyde de phénylène), des polyoléfines chlorées ou des polymères fluorés, des copolymères séquencés, notamment constitués de styrène, d'éthylène, de propène et de butène, ou des caoutchoucs naturels et de synthèse.

5. Procédé suivant l'une des revendications 1 à 3, caractérisé en ce qu'il consiste à utiliser, comme polymères organiques, des poly(oxydes de phénylène), du poly(chlorure de vinyle), du poly(fluorure de vinylidène), des copolymères d'ethylène et d'oléfines halogénées ou des polyesters insaturés et des polyuréthannes.

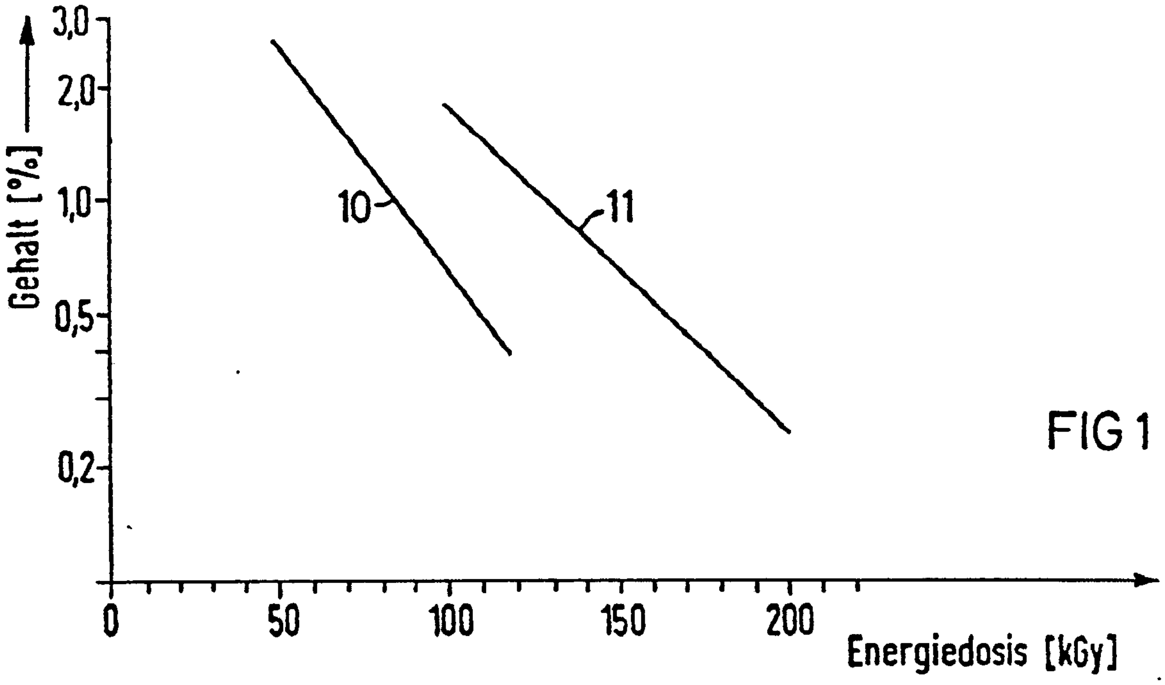


FIG 1

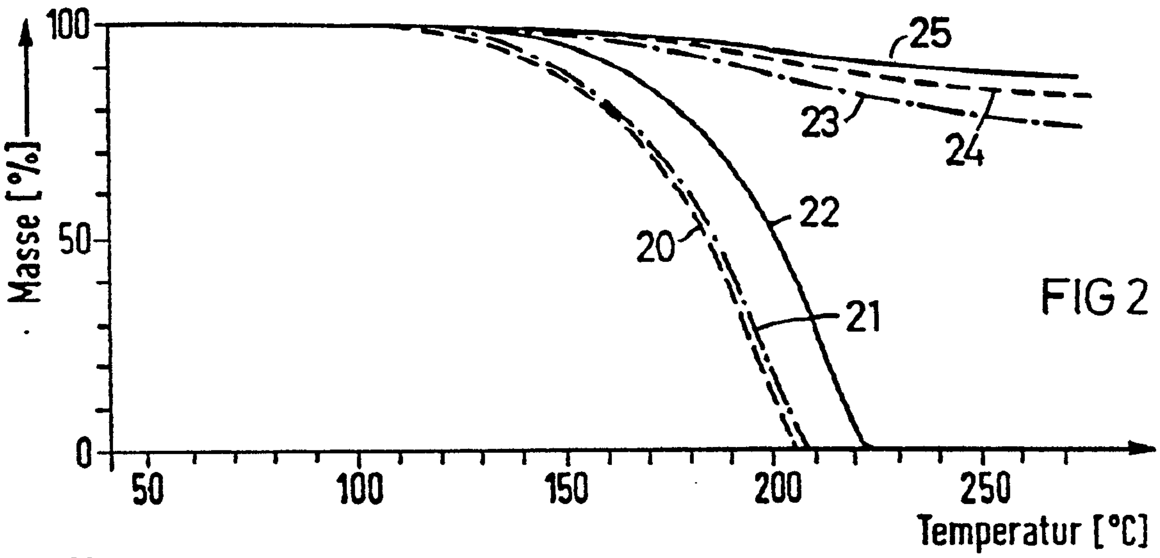


FIG 2

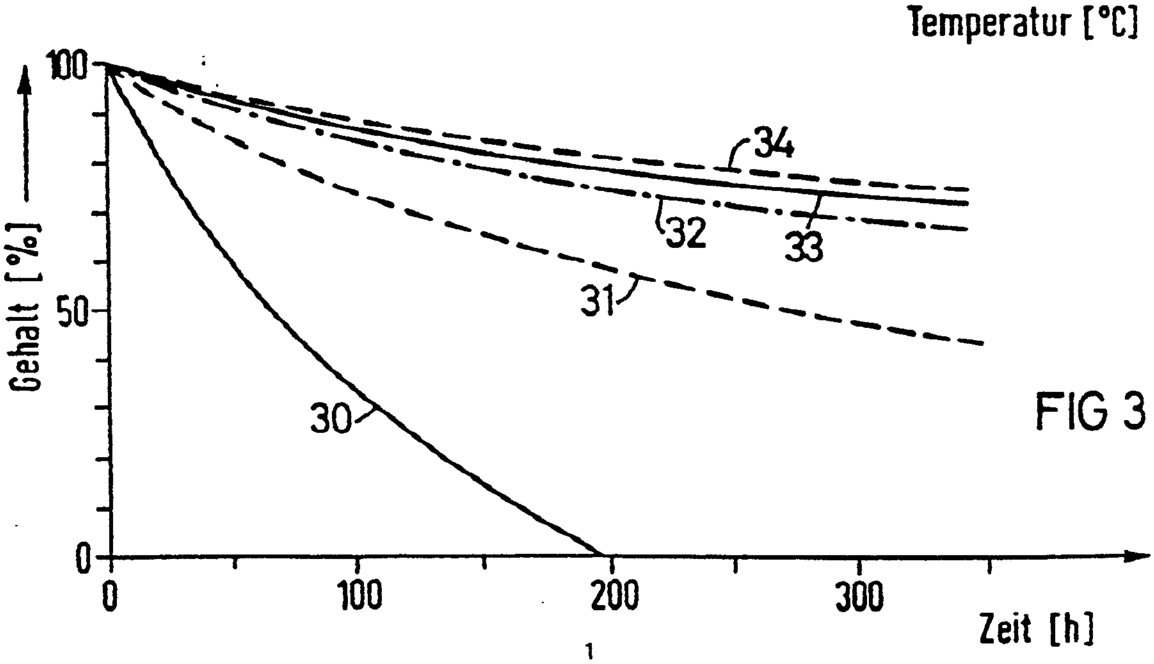


FIG 3